# FASCICULE DE BREVET EUROPEEN

(11) **EP 0 606 173 B1**
(45) Date de publication et mention de la délivrance du brevet: **23.04.1997**
(21) Numéro de dépôt: 94400004.1
(22) Date de dépôt: 03.01.1994
(51) Int. Cl.: G05D 1/00

(54) **Ensemble de guidage**
Führungsanlage
Guiding assembly

(30) Priorité: 05.01.1993 FR 9300019
(43) Date de publication de la demande: 13.07.1994
(73) Titulaire: SFIM INDUSTRIES, F-91300 Massy (FR)
(72) Inventeur: Audren, Jean-Thierry, F-91400 Orsay (FR)
(74) Mandataire: Schrimpf, Robert

(56) Documents cités:
- WO-A-89/03085
- WO-A-90/02370
- US-A- 4 855 822
- US-A- 5 155 683
- US-A- 5 170 352

## Description

La présente invention est relative à un ensemble pour le guidage par un opérateur d'un engin doté de moyens d'auto-propulsion se déplaçant.

Un tel engin est par exemple un robot terrestre que l'on souhaite pouvoir guider à distance dans son déplacement sur un terrain accidenté.

Il est déjà connu d'équiper un tel engin mobile d'une caméra relevant des images de l'environnement dans lequel cet engin se déplace. Ces images sont transmises à une station de commande extérieure où elles sont analysées par un opérateur qui transmet en retour à l'engin des instructions de déplacement.

Dans le cas d'un engin se déplaçant dans un environnement non accidenté, comme c'est le cas par exemple d'un engin guidé à partir d'un avion dont il a été laché, le dialogue entre l'engin et la station de commande s'effectue habituellement par l'intermédiaire d'une liaison filaire qui se déroule au fur et à mesure que l'engin s'éloigne de la station de commande.

Les liaisons filaires sont néanmoins impropres au pilotage d'un engin au sol. Les accidents du terrain sur lequel l'engin évolue sont en effet susceptibles d'empêcher un déroulement satisfaisant de la liaison filaire et de gêner l'engin dans sa progression.

On a déjà envisagé de transmettre les images enregistrées par la caméra portée par l'engin en utilisant les techniques de communication hertzienne. Néanmoins, les largeurs de bandes qui sont habituellement nécessaires pour la transmission d'images en continu sont importantes, ce qui oblige à utiliser des fréquences élevées, donc des portées optiques. L'engin est de plus repérable lorsqu'il émet car avec de telles largeurs de bande, les techniques de discrétion électromagnétique telles que l'étalement de spectre ou les sauts de fréquences ne sont pas utilisables. En outre, la liaison entre l'engin et sa station de commande est interrompue dès qu'un obstacle s'interpose entre eux.

Des ensembles de guidage correspondant au préambule de la revendication 1 sont décrits dans les documents US-A-4 855 822 et US-A-5 155 683.

La présente invention propose un ensemble pour le guidage dans son déplacement d'un engin doté de moyens d'auto-propulsion qui permet de pallier ces différents inconvénients.

A cet effet, l'ensemble selon l'invention est un ensemble pour le guidage par un opérateur d'un engin doté de moyens d'auto-propulsion comportant une unité de commande embarquée sur l'engin et une station de commande extérieure à partir de laquelle l'opérateur réalise son guidage, l'unité de commande comportant des moyens de gestion des moyens d'auto-propulsion et des moyens pour déterminer la position de l'engin et transmettre à ces moyens de gestion des informations sur cette position, une caméra étant montée sur l'engin, cette caméra enregistrant des images de l'environnement dans lequel l'engin se déplace, l'unité de commande comportant des moyens pour la transmission d'images enregistrées par la caméra à des moyens de réception de la station de commande, la station de commande comportant des moyens pour la visualisation par l'opérateur de ces images ainsi que, d'une part, des moyens d'instruction permettant à l'opérateur de donner en retour ses instructions de guidage à la station de commande, et, d'autre part, des moyens pour la transmission de ces instructions à des moyens de réception de l'unité de commande, celle-ci comportant des moyens pour transmettre ces instructions aux moyens de gestion des moyens d'auto-propulsion, les moyens de transmission et de réception de l'unité de commande et de la station de commande étant des moyens de communication par ondes se propageant dans un milieu de transmission ouvert, l'unité de commande comportant des moyens pour que la transmission d'images soit séquentielle, deux images transmises successives étant séparées entre elles par un intervalle de temps prédéterminé, les moyens d'instruction de la station de commande comportant des moyens pour la sélection par l'opérateur sur l'image visualisée d'au moins un pixel correspondant à un point de l'environnement qui est un objectif vers lequel l'engin est à diriger, caractérisé en ce qu'un imageur tridimensionnel est porté par l'engin et réalise un relevé de mesures relatives à la distance entre l'engin et des éléments situés dans un champ de l'environnement observé par la caméra, et en ce que les moyens de gestion comportent des moyens pour mettre en correspondance les coordonnées dudit pixel sur cette image et le relevé de mesures réalisé par l'imageur simultanément à l'enregistrement de cette image par la caméra et pour en déduire les coordonnées tridimensionnelles du point objectif visé, les moyens de gestion comportant également des moyens pour déterminer, en fonction de ces coordonnées tridimensionnelles, une trajectoire à suivre par l'engin pour atteindre ce point objectif, ainsi que des moyens pour actionner les moyens d'auto-propulsion de façon que l'engin se déplace selon cette trajectoire jusqu'à ce qu'il reçoive de la station de commande de nouvelles instructions.

Cet ensemble est avantageusement complété par les caractéristiques suivantes prises seules ou selon toutes leurs combinaisons techniquement possibles :
- les moyens de gestion comportent des moyens pour déterminer pour l'engin une vitesse fonction des coordonnées tridimensionnelles du point objectif visé ;
- l'intervalle de temps qui sépare les transmissions par l'unité de commande de deux images successives est de l'ordre de ou supérieur à la seconde ;
- cet intervalle de temps est de l'ordre de 2 secondes ;
- les moyens d'instruction de la station de commande comprennent des moyens pour la sélection par l'opérateur sur l'image visualisée d'une succession de pixels, les moyens de gestion comportant des moyens pour déterminer en fonction des coordonnées tridimensionnelles des points de l'environnement ainsi désignés par l'opérateur, une trajectoire à suivre par l'engin pour passer successivement par ces différents points ;
- les moyens d'instruction de la station de commande comportent un stylo qui est interactif avec un écran sur lequel l'image est visualisée ;
- la caméra et l'imageur sont portés par une plateforme montée mobile par rapport à l'engin, cette plateforme portant également des moyens pour relever des informations relatives aux mouvements de ladite plateforme et les transmettre aux moyens de gestion, ces informationsx étant prises en compte par ces moyens de gestion pour le calcul des coordonnées tridimensionnelles du (ou des) point(s) objectif(s) ;
- les moyens pour déterminer la position de l'engin comprennent une centrale inertielle ;
- les moyens de gestion comportent des moyens pour déterminer la trajectoire à suivre par l'engin en fonction notamment du déplacement dudit engin entre la transmission par l'unité de commande de l'image sur laquelle l'opérateur choisit un pixel et la transmission des instructions en retour par la station de commande ;
- le milieu de transmission étant l'air ou l'eau, les ondes sont hertziennes ou sonores ;
- les moyens de communication sont de type hertziens et utilisent des fréquences porteuses radioélectriques.

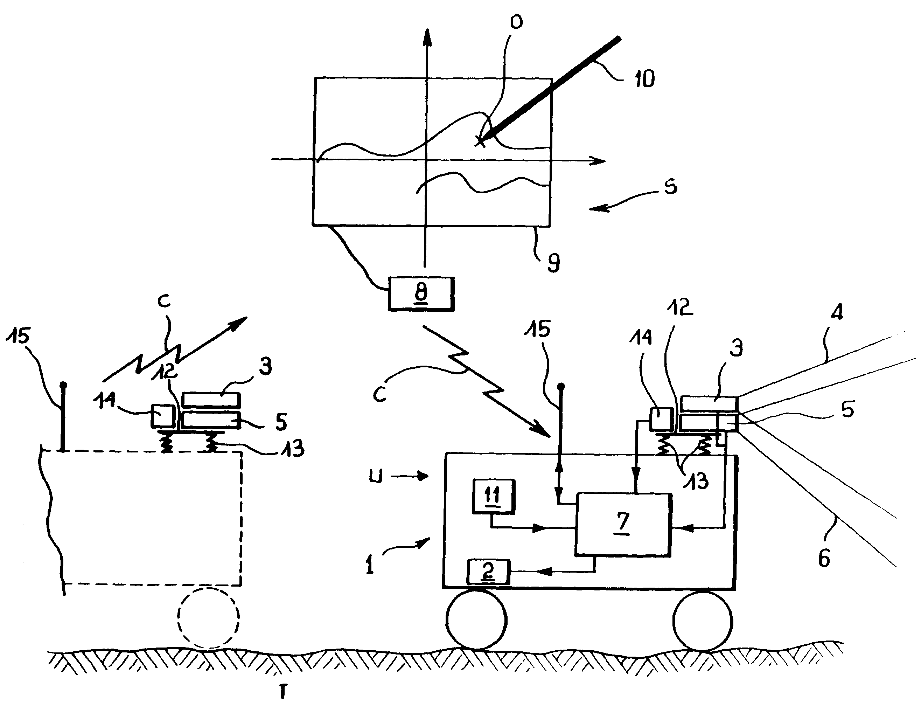

La description qui suit d'un mode de réalisation particulier de l'invention est purement illustrative et non limitative. Elle doit être lue en regard du dessin unique annexé sur lequel a été représenté schématiquement un ensemble de guidage conforme à ce mode de réalisation.

Cet ensemble permet le guidage d'un engin 1 qui roule sur un terrain T accidenté. Des moyens d'auto-propulsion 2 communiquent à cet engin 1 un certain mouvement. Notamment, ces moyens d'auto-propulsion 2 permettent de contrôler la vitesse et la trajectoire de l'engin 1.

L'engin 1 porte une caméra vidéo 3 qui filme un champ optique 4 de l'environnement dans lequel l'engin 1 se déplace. Ce champ optique 4 est par exemple situé à l'avant de l'engin 1 par rapport à son sens de déplacement.

L'engin 1 porte également un imageur tridimensionnel 5 qui observe un champ 6 de l'environnement. Le champ 6 recoupe une majeure partie du champ optique 4. Ainsi, l'imageur 5 réalise un relevé de mesures relatives à la distance entre l'engin 1 et des éléments sur le terrain T situés dans le champ de l'environnement qui est l'intersection des champs 4 et 6.

Les images enregistrées par la caméra 3 et les relevés tridimensionnels réalisés par l'imageur 5 sont transmis à un microprocesseur 7 de gestion d'une unité de commande U embarquée sur l'engin 1. Cette unité U dialogue par des moyens d'émission-réception 15 avec une unité d'émission-réception 8 d'une station S externe de commande. La communication ainsi réalisée est de type hertzienne et utilise des fréquences porteuses radio-électriques.

Notamment, l'unité U transmet en temps réel de façon séquentielle à la station externe S des images enregistrées par la caméra 3. Cette transmission s'effectue à la cadence d'une image toutes les deux secondes. A cet effet, le microprocesseur 7 utilise les techniques connues de compression d'images. En outre, le microprocesseur 7 mémorise chaque image transmise et le relevé tridimensionnel correspondant effectué par l'imageur 5.

La station S comporte un écran de visualisation 9 relié à l'unité d'émission-réception 8, ainsi que des moyens, tels qu'un stylo 10 interactif avec l'écran 9, par lesquels un opérateur transmet des informations, par l'intermédiaire de l'unité 8, à l'unité de commande U. Cet écran 9 et ce stylo 10 sont par exemple du type de ceux qui sont classiquement utilisés en CAO et PAO.

Une image transmise par l'unité 11 est visualisée sur l'écran 9 par l'opérateur. A l'aide du stylo de contact 10, l'opérateur choisit sur l'écran 9 un pixel O particulier de l'image qu'il reçoit. Ce pixel O correspond à un point de l'environnement dans lequel se déplace l'engin 1, qui est un objectif vers lequel l'opérateur souhaite diriger ledit engin 1.

Les coordonnées de ce pixel O choisi sont transmises à l'unité de commande 4. Le microprocesseur 7 comporte un programme pour mettre en correspondance ces coordonnées et le relevé tridimensionnel correspondant à l'image analysée par l'opérateur et pour ainsi déterminer les coordonnées tridimensionnelles du point objectif visé. Une fois ces coordonnées déterminées, un programme du micro-processeur 7 calcule pour l'engin 1 une trajectoire à suivre pour atteindre le point objectif. Ce programme peut également déterminer pour l'engin 1 une vitesse sur cette trajectoire fonction des coordonnées tridimensionnelles du point objectif visé et notamment de la distance entre ce point et l'engin 1. Jusqu'à ce que l'unité de commande U reçoive de la station de commande S de nouvelles instructions, le microprocesseur 7 actionne les moyens d'auto-propulsion 2 de façon que l'engin se déplace selon la trajectoire et avec la vitesse ainsi déterminées.

A cet effet, l'engin 1 comporte également une centrale inertielle embarquée 11 qui transmet en permanence au microprocesseur 7 des informations relatives à la position dudit engin 1 par rapport à un référentiel dans lequel il se déplace. Le microprocesseur 7 comporte un automatisme classique à boucle de régulation qui maintient l'engin 1 sur la trajectoire de consigne calculée.

L'opérateur a également la possibilité de tracer à l'aide du stylo 10 sur l'écran de visualisation 9 une courbe passant par plusieurs points objectifs que l'engin 1 doit viser successivement. Les coordonnées de la suite de pixels désignés par l'opérateur sont transmises par l'unité d'émission-réception 8 à l'unité de commande 4. Le microprocesseur 7 déduit du relevé tridimensionnel de l'imageur 5 correspondant à l'image sur laquelle ces pixels ont été choisis les coordonnées tridimensionnelles des différents points objectifs visés par l'opérateur, puis détermine une trajectoire optimum passant par ces différents points objectifs.

Entre le moment où l'unité U émet une image et le moment où cette unité U reçoit en retour les coordonnées d'un pixel désigné par l'opérateur sur son écran 9, l'engin 1 s'est déplacé par exemple de sa position représentée en traits discontinus sur la figure, à sa position représentée en traits pleins. Les coordonnées de ce déplacement sont fournies au microprocesseur 7 par la centrale inertielle 11. Elles sont prises en compte par le microprocesseur 7 pour le calcul de la trajectoire de l'engin 1.

Afin que les images relevées par la caméra 3 aient une plus grande netteté, la caméra 3 est avantageusement disposée, avec l'imageur 5, sur une plateforme 12 montée par rapport à l'engin 1 sur des moyens 13 d'amortissement. Cette plateforme 12 peut également être motorisée pour permettre par exemple à la caméra 3 et à l'imageur 5 de réaliser des balayages de l'environnement en azimut et en site. Pour tenir compte du mouvement relatif entre cette plateforme 12 et l'engin 1, la plateforme 12 comporte des capteurs 14 qui transmettent à l'unité 7 des informations relatives au mouvement de la plateforme 12, et donc de la caméra 3 et de l'imageur 5, par rapport au référentiel dans lequel l'engin 1 et cette plateforme 12 se déplacent.

La caméra 3 et l'imageur 5 sont disposés l'un à côté de l'autre. La correspondance entre les images relevées par la caméra 3 selon le champ optique 4 et les relevés tridimensionnels selon le champ 6 réalisés par l'imageur 5 qu'effectue le programme du microprocesseur 7 tient compte de l'écartement entre ladite caméra 3 et ledit imageur 5.

L'imageur 5 est avantageusement un imageur télémétrique laser, mais peut être réalisé par toute technique connue (radar millimétrique, stéréovision ou autre).

La caméra peut être prévue infra-rouge pour des opérations de nuit.

Pour une cadence de transmission d'une image toutes les deux secondes, la largeur de bande nécessaire est divisée par 50 par rapport aux largeurs de bandes classiquement utilisées en transmission d'images (25 images par seconde pour une largeur de bande de 6 MHz dans le cas de transmissions classiques), et la capacité de transmission utile est de 40 Kbits/s si l'on utilise des transmissions numériques associées à des compressions de données connues. La fréquence de la portée de transmission utilisée est de quelques dizaines de mégaHertz ce qui autorise le passage des reliefs.

Lorsqu'il utilise l'ensemble de guidage qui vient d'être décrit, l'opérateur n'a qu'à interpréter l'image qu'il reçoit pour indiquer les objectifs à atteindre. L'engin fonctionne de façon autonome dans l'intervalle de temps séparant deux interventions de l'opérateur. Notamment, l'engin détermine les trajectoires à suivre pour atteindre ces objectifs et effectue de lui-même les corrections de conduite qui sont nécessaires pour rester sur ces trajectoires lorsqu'il rencontre des accidents de terrain.

## Revendications

1. Ensemble pour le guidage par un opérateur d'un engin (1) doté de moyens d'auto-propulsion (2) comportant une unité de commande (U) embarquée sur l'engin et une station de commande extérieure (S) à partir de laquelle l'opérateur réalise son guidage, l'unité de commande (U) comportant des moyens (7) de gestion des moyens d'auto-propulsion (2) et des moyens (11) pour déterminer la position de l'engin et transmettre à ces moyens de gestion (7) des informations sur cette position, une caméra (3) étant montée sur l'engin (1), cette caméra (3) enregistrant des images de l'environnement dans lequel l'engin (1) se déplace, l'unité de commande (U) comportant des moyens (13) pour la transmission d'images enregistrées par la caméra (3) à des moyens de réception (8) de la station de commande (S), la station de commande (S) comportant des moyens (9) pour la visualisation par l'opérateur de ces images ainsi que, d'une part, des moyens d'instruction (10) permettant à l'opérateur de donner en retour ses instructions de guidage à la station de commande, et, d'autre part, des moyens (8) pour la transmission de ces instructions à des moyens de réception (13) de l'unité de commande (U), celle-ci comportant des moyens pour transmettre ces instructions aux moyens de gestion (7) des moyens d'auto-propulsion, les moyens (13, 8) de transmission et de réception de l'unité de commande (U) et de la station de commande (S) étant des moyens de communication par ondes se propageant dans un milieu de transmission ouvert, l'unité de commande (U) comportant des moyens (7) pour que la transmission d'images soit séquentielle, deux images transmises successives étant séparées entre elles par un intervalle de temps prédéterminé, les moyens d'instruction (10) de la station de commande (S) comportant des moyens pour la sélection par l'opérateur sur l'image visualisée d'au moins un pixel correspondant à un point de l'environnement qui est un objectif vers lequel l'engin est à diriger, caractérisé en ce qu'un imageur (5) tridimensionnel est porté par l'engin (1) et réalise un relevé de mesures relatives à la distance entre l'engin et des éléments situés dans un champ de l'environnement observé par la caméra (3), et en ce que les moyens de gestion (7) comportent des moyens pour mettre en correspondance les coordonnées du pixel selectionné par l'opérateur sur l'image qu'il visualise et le relevé de mesures réalisé par l'imageur (5) simultanément à l'enregistrement de cette image par la caméra (3) et pour en déduire les coordonnées tridimensionnelles du point objectif visé, les moyens de gestion (7) comportant également des moyens pour déterminer, en fonction de ces coordonnées tridimensionnelles, une trajectoire à suivre par l'engin (1) pour atteindre ce point objectif, ainsi que des moyens pour actionner les moyens d'auto-propulsion de façon que l'engin se déplace selon cette trajectoire jusqu'à ce qu'il reçoive de la station de commande de nouvelles instructions.

2. Ensemble selon la revendication 1, caractérisé en ce que les moyens de gestion (7) comportent des moyens pour déterminer pour l'engin une vitesse fonction des coordonnées tridimensionnelles du point objectif visé.

3. Ensemble selon l'une quelconque des revendications 1 et 2, caractérisé en ce que l'intervalle de temps qui sépare les transmissions par l'unité de commande (U) de deux images successives est de l'ordre de ou supérieur à la seconde.

4. Ensemble selon la revendication 3, caractérisé en ce que cet intervalle de temps est de l'ordre de 2 secondes.

5. Ensemble selon l'une quelconque des revendications 1 à 4, caractérisé en ce que les moyens d'instruction (10) de la station de commande (S) comprennent des moyens pour la sélection par l'opérateur sur l'image visualisée d'une succession de pixels, les moyens de gestion (7) comportant des moyens pour déterminer en fonction des coordonnées tridimensionnelles des points de l'environnement ainsi désignés par l'opérateur, une trajectoire à suivre par l'engin pour passer successivement par ces différents points.

6. Ensemble selon l'une quelconque des revendications 1 à 5, caractérisé en ce que les moyens d'instruction de la station de commande comportent un stylo (10) qui est interactif avec un écran sur lequel l'image est visualisée.

7. Ensemble selon l'une quelconque des revendications 1 à 6, caractérisé en ce que la caméra (3) et l'imageur (5) sont portés par une plateforme (12) montée mobile par rapport à l'engin (1), cette plateforme (12) portant également des moyens (14) pour relever des informations relatives aux mouvements de ladite plateforme et les transmettre aux moyens de gestion, ces informations étant prises en compte par ces moyens de gestion pour le calcul des coordonnées tridimensionnelles du (ou des) point(s) objectif(s).

8. Ensemble selon l'une quelconque des revendications 1 à 7, caractérisé en ce que les moyens de gestion (7) comportent des moyens pour déterminer la trajectoire à suivre par l'engin en fonction notamment du déplacement dudit engin entre la transmission par l'unité de commande de l'image sur laquelle l'opérateur choisit un pixel et la transmission des instructions en retour par la station de commande.

9. Ensemble selon l'une quelconque des revendications 1 à 8, caractérisé en ce que, le milieu de transmission étant l'air ou l'eau, les ondes sont hertziennes ou sonores.

10. Ensemble selon la revendication 9, caractérisé en ce que les moyens de communication sont de type hertziens et utilisent des fréquences porteuses radioélectriques.

## Patentansprüche

1. Anordnung für die Führung durch einen Bediener einer mit Selbstantriebsmitteln (2) versehenen Vorrichtung bzw. Transportmaschine mit einer auf die Transportmaschine geladenen Steuerungseinheit (U) und einer externen Steuerungsstation (S), von der ausgehend der Bediener seine Führung verwirklicht, wobei die Steuerungseinheit (U) Mittel (7) für die Steuerung des Selbstantriebsmittels (2) und Mittel (11) zum Bestimmen der Position der Transportmaschine und zum Übertragen von Informationen über diese Position an diese Steuerungsmittel (7) aufweist, wobei eine Kamera (3) auf der Transportmaschine (1) angebracht ist, diese Kamera (3) Bilder der Umgebung aufnimmt, in der sich die Transportmaschine (1) fortbewegt, die Steuerungseinheit (U) Mittel (13) für die Übertragung von von der Kamera (3) aufgenommenen Bildern an Empfangsmittel (8) der Steuerungsstation (S) aufweist, die Steuerungsstation (S) Mittel (9) für die Sichtbarmachung dieser Bilder für den Bediener aufweist, wie auch einerseits Instruktionsmittel (10), die dem Bediener ermöglichen, seine Führungsinstruktionen dafür an die Steuerungsstation zu geben, und andererseits Mittel (8) für die Übertragung dieser Instruktionen an Empfangsmittel (13) der Steuerungseinheit (U), welche Mittel zum Übertragen dieser Instruktionen an die Steuerungsmittel (7) der Selbstantriebsmittel aufweist, wobei die Mittel (13, 8) zum Übertragen und zum Empfangen der Steuerungseinheit (U) und der Steuerungsstation (S) Kommunikationsmittel mittels Wellen sind, die sich in einem offenen Übertragungsmedium ausbreiten, wobei die Steuerungseinheit (U) Mittel (7) aufweist, damit die Bildübertragung sequentiell erfolgt, wobei zwei nacheinander übertragene Bilder durch ein vorbestimmtes Zeitintervall voneinander getrennt sind, die Instruktionsmittel (10) der Steuerungsstation (S) Mittel für die Auswahl durch den Bediener von wenigstens einem Pixel auf dem sichtbar gemachten Bild aufweisen, der einem Punkt der Umgebung entspricht, der ein Ziel ist, in dessen Richtung die Transportmaschine zu führen ist, dadurch gekennzeichnet, daß ein dreidimensionales Bildverarbeitungssystem (5) von der Transportmaschine (1) getragen ist und eine Aufnahme von Messungen durchführt, die die Entfernung zwischen der Transportmaschine und Elementen betreffen, die in einem von der Kamera (3) observierten Feld der Umgebung angeordnet sind, und daß die Steuerungsmittel (7) Mittel aufweisen, um die Koordinaten des Pixels, der von dem Bediener auf dem Bild ausgewählt wird, das er sichtbar macht, und die Aufnahme der Messungen zu korrelieren, die von dem Bildverarbeitungssystem (5) gleichzeitig mit der Aufnahme dieses Bildes durch die Kamera (3) durchgeführt wird, und um daraus die dreidimensionalen Koordinaten des anvisierten Zielpunktes abzuleiten, wobei die Steuerungsmittel (7) ebenfalls Mittel zum Bestimmen, in Abhängigkeit dieser dreidimensionalen Koordinaten, einer von der Transportmaschine (1) zum Erreichen dieses Zielpunktes zu folgenden Trajektorie wie auch Mittel aufweist zum Betätigen der Selbstantriebsmittel derart, daß sich die Transportmaschine entlang dieser Trajektorie fortbewegt, bis sie neue Instruktionen von der Steuerungsstation erhält.

2. Anordnung nach Anspruch 1, dadurch gekennzeichnet, daß die Steuerungsmittel (7) Mittel aufweisen, um für die Transportmaschine eine Geschwindigkeit als Funktion der dreidimensionalen Koordinaten des anvisierten Zielpunktes zu bestimmen.

3. Anordnung nach einem der Ansprüche 1 oder 2, dadurch gekennzeichnet, daß das Zeitintervall, das die Übertragungen durch die Steuerungseinheit (U) zweier aufeinanderfolgender Bilder trennt, in der Größenordnung oder größer als eine Sekunde ist.

4. Anordnung nach Anspruch 3, dadurch gekennzeichnet, daß dieses Zeitintervall in der Größenordnung von zwei Sekunden liegt.

5. Anordnung nach einem der Ansprüche 1 bis 4, dadurch gekennzeichnet, daß die Instruktionsmittel (10) der Steuerungsstation (S) Mittel aufweisen für die Auswahl einer Folge von Pixeln auf diesem sichtbar gemachten Bild durch den Bediener, wobei die Steuerungsmittel (7) Mittel aufweisen zum Bestimmen einer von der Transportmaschine zu folgenden Trajektorie als Funktion der dreidimensionalen Koordinaten der so von dem Bediener bestimmten Punkte der Umgebung, um nacheinander diese verschiedenen Punkte zu passieren.

6. Anordnung nach einem der Ansprüche 1 bis 5, dadurch gekennzeichnet, daß die Instruktionsmittel der Steuerungsstation einen Stift (10) aufweisen, der interaktiv mit einem Bildschirm ist, auf dem das Bild sichtbar gemacht wird.

7. Anordnung nach einem der Ansprüche 1 bis 6, dadurch gekennzeichnet, daß die Kamera (3) und das Bildverarbeitungssystem (5) von einer Plattform (12) getragen werden, die beweglich bezüglich der Transportmaschine (1) angeordnet ist, wobei diese Plattform (12) ebenfalls Mittel (14) zum Aufnehmen von die Bewegungen dieser Plattform betreffenden Informationen und zum Übertragen dieser an die Steuerungsmittel aufweist, wobei diese Informationen von diesen Steuerungsmitteln für die Berechnung der dreidimensionalen Koordinaten des (oder der) Zielpunktes(e) berücksichtigt werden.

8. Anordnung nach einem der Ansprüche 1 bis 7, dadurch gekennzeichnet, daß die Steuerungsmittel (7) Mittel aufweisen zum Bestimmen der von der Transportmaschine zu folgenden Trajektorie als Funktion insbesondere der Verschiebung der Transportmaschine zwischen der Übertragung des Bildes durch die Steuerungseinheit, auf welchem der Bediener einen Pixel auswählt, und der Übertragung von Instruktionen im Gegenzug durch die Steuerungsstation.

9. Anordnung nach einem der Ansprüche 1 bis 8, dadurch gekennzeichnet, daß das Übertragungsmedium Luft oder Wasser ist, wobei die Wellen elektromagnetische Wellen oder Schallwellen sind.

10. Anordnung nach Anspruch 9, dadurch gekennzeichnet, daß die Kommunikationsmittel elektromagnetischer Art sind und radioelektrische Trägerfrequenzen verwenden.

## Claims

1. System used by an operator to guide a machine (1) having self-propulsion means (2), the system including a control unit (U) on the machine and an external control station (S) from which the operator guides the machine, the control unit (U) including control means (7) for said self-propulsion means (2) and means (11) for determining the position of the machine and transmitting information on this position to the control means (7), a camera (3) being mounted on the machine (1), said camera (3) generating pictures of the environment in which the machine (1) is moving, the control unit (U) including means (13) for transmitting pictures picked up by the camera (3) to receive means (8) of the control station (S), the control station (S) comprising means (9) for the operator to view said pictures and, firstly, instruction means (10) enabling the operator to input guidance instructions to the control station and, secondly, means (8) for transmitting said instructions to receive means (13) of the control unit (U), the latter comprising means for transmitting said instructions to the control means (7) of the self-propulsion means, the transmit and receive means (13, 8) of the control unit (U) and of the control station (S) being communication means transmitting waves which propagate in an open transmission medium, the control unit (U) including means (7) whereby the transmission of pictures is sequential, two successive transmitted pictures being separated by a predetermined time interval, the instruction means (10) of the control station (S) including means for selection by the operator on the displayed image of at least one pixel corresponding to a point in the environment which is a target to which the machine is to be directed, characterised in that a three-dimensional imaging system (5) is carried by the machine (1) and measures the distance between the machine and elements in an environment field observed by the camera (3) and in that the control means (7) include means for establishing a corresponding relationship between the coordinates of the pixel and the measurements made by the imaging system (5) simultaneously with picking up of said picture by the camera (3) and for deducing therefrom three-dimensional coordinates of the target point, the control means (7) also including means for determining, on the basis of said three-dimensional coordinates, a path to be followed by the machine (1) to reach said target point, and means for operating the self-propulsion means so that the machine moves along said path until such time as it receives further instructions from the control station.

2. System according to claim 1 characterised in that the control means (7) include means for determining a speed for the machine according to the three-dimensional coordinates of the target point.

3. System according to claim 1 or claim 2 characterised in that the time interval between transmissions by the control unit (U) of two successive pictures is in the order of one second or greater.

4. System according to claim 3 characterised in that said time interval is in the order of two seconds.

5. System according to any one of claims 1 to 4 characterised in that the instruction means (10) of the control station (S) include means for selection by the operator on the displayed picture of a succession of pixels, the control means (7) including means for determining according to the three-dimensional coordinates of the points in the environment designated by the operator a path to be followed by the machine to pass successively through these points.

6. System according to any one of claims 1 to 5 characterised in that the instruction means of the control station include a pen (10) which is interactive with a screen on which the picture is displayed.

7. System according to any one of claims 1 to 6 characterised in that the camera (3) and the imaging system (5) are carried by a platform (12) mounted on the machine (1) so as to be mobile relative thereto, said platform (12) also carrying means (14) for registering information relating to movement of said platform and transmitting same to the control means, said control means acting on said information when calculating the three-dimensional coordinates of the target point(s).

8. System according to any one of claims 1 to 7 characterised in that the control means (7) include means for determining the path to be followed by the machine according to factors including the displacement of said machine between transmission by the control unit of the picture on which the operator chooses a pixel and transmission of instructions in return by the control station.

9. System according to any one of claims 1 to 8 characterised in that, the transmission medium being air or water, the waves are radio waves or sound waves.

10. System according to claim 9 characterised in that the communication means are radio communication means and use radio frequency carriers.
